# EUROPÄISCHE PATENTANMELDUNG

(11) **EP 3 070 391 A1**
(43) Veröffentlichungstag der Anmeldung: **21.09.2016**
(21) Anmeldenummer: 16154003.4
(22) Anmeldetag: 03.02.2016
(51) Int. Cl.: F16L 37/38, B67D 1/04

(54) **KUPPLUNG, VERFAHREN UND GETRÄNKEVERARBEITUNGSANLAGE**

(30) Priorität: 19.03.2015 DE 102015205037
(71) Anmelder: Krones AG, 93073 Neutraubling (DE)
(72) Erfinder: Justl, Florian, 93073 Neutraubling (DE); Runge, Torsten, 93073 Neutraubling (DE); Haupt, Daniela, 85570 Neutraubling (DE)
(74) Vertreter: Grünecker Patent- und Rechtsanwälte PartG mbB

(57) **Zusammenfassung**

Bei einer Kupplung (K) mit mechanisch kuppelbaren Kupplungsteilen (1, 2) zum Verbinden zweier Anschlüsse (A, B) über einen zu öffnenden Druckfluid-Durchgang (3) unter aseptischer Kondition, die durch Sterilisieren von vor dem Kuppeln der Kupplungsteile (1, 2) Umgebungseinfluss und nach dem Öffnen des Druckfluid-Durchgangs (3) dem Druckfluid ausgesetzten Oberflächenbereichen der Kupplungsteile (1, 2) herstellbar ist, wird in der Kupplung (K) ein von den Oberflächenbereichen begrenzter, bei mechanisch gekoppelten Kupplungsteilen (1, 2) gegenüber den Anschlüssen (A, B) isolierter Raum (R) gebildet, und weist die Kupplung (K) Einrichtungen zum Sterilisieren des isolierten Raums (R) mit von außen unter Druck eingebrachtem Sterilisationsmedium und zum erst nachfolgenden Öffnen des Druckfluid-Durchgangs (3) auf.

## Beschreibung

Die Erfindung betrifft eine Kupplung gemäß Oberbegriff Anspruch 1, ein Verfahren gemäß Oberbegriff Patentanspruch 13 und eine Getränkeverarbeitungsanlage gemäß Oberbegriff Patentanspruch 16.

Als nicht beschränkendes Beispiel ist es in der Getränkeindustrie bekannt, aus einem Behälter ein gespeichertes, z. B. flüssiges Produkt oder Vorprodukt im Produktionsablauf einzudosieren. Das Produkt wird aus dem Behälter durch in den Behälter eingebrachten Fluiddruck ausgebracht. Das Druckfluid muss jedoch unter aseptischen oder sterilen Bedingungen in den Behälter eingespeist werden, und zwar über eine Kupplung zwischen einem Behälteranschluss und einer Druckfluidleitung, um keine Verschmutzungen oder Keime einzubringen. Das Druckfluid ist beispielsweise Reinluft oder Stickstoff. Der Behälter ist an einem einen Kupplungsteil bildenden Behälteranschluss druckdicht verschlossen, wenn das Produkt zur Getränkeverarbeitungsanlage bzw. zu einer Abfüllmaschine transportiert wird. Erst danach wird die den anderen Kupplungsteil aufweisende Druckfluidleitung mit dem Behälteranschluss verbunden. Die getrennten Kupplungsteile sind zuvor ungeschützt zugänglich. Beim Transport des Behälters ist also der Behälteranschluss der Außenumgebung ausgesetzt und kann kontaminiert werden, wie auch der freiliegende Kupplungsteil für die Druckfluidleitung. Um aseptische oder sterile Konditionen sicherzustellen, wird deshalb in der Praxis vor dem Verbinden der Kupplungsteile jeder Kupplungsteil mit einem Desinfektionsmittel, z. B. Alkohol, Peroxid oder dergleichen von Hand behandelt. Dies ist zeitaufwendig und resultiert in einer aseptischen Kondition, deren Qualität abhängig ist vom Geschick und der Sorgfalt des Personals und der Dauer des Behandlungsprozesses. Deshalb kommt es in der Praxis häufig zu mangelnder Desinfektion, wodurch Verschmutzungen, Keime, Bakterien oder dergleichen in den Behälter gelangen können, die das Produkt verschmutzen, sodass ganze Chargen abgefüllter kontaminierter Getränke unbrauchbar sind und kosten- und zeitaufwendige Reinigungsarbeiten und Rückrufaktionen erfordern. Auch können aggressive Mittel Irritationen beim Personal verursachen.

Eine für solche Zwecke verwendbare, als Schnellkupplung bezeichnete Kupplung ist bekannt aus EP 1 006 308 B1. Mit dem mechanischen Verbinden der Kupplungsteile wird gleichzeitig ein selbsttätig sperrendes Ventil im Behälteranschluss geöffnet und so der Fluiddurchgang geöffnet.

In der Getränkeindustrie werden ferner Schnellkupplungen aus rostfreiem Stahl verwendet, wie sie aus der Informationsschrift "EATON quick disconnect couplings" Master Catalog E-MEQD-CC001-E1, Oktober 2013, Seite 122" bekannt sind. Die beiden Kupplungsteile werden hierbei ineinandergesteckt, durch eine Kugelverriegelung mechanisch verbunden, und öffnen gleichzeitig den Fluid-Durchgang.

Der Erfindung liegt die Aufgabe zu Grunde, eine Kupplung, ein Verfahren und eine Getränkeverarbeitungsanlage anzugeben, mit denen trotz bequemer Handhabung eine mit höherer Qualität reproduzierbare aseptische, oder sterile Kondition bei der Verarbeitung eines Produkts unabhängig von Bedienereinflüssen sichergestellt ist.

Die gestellte Aufgabe wird mit der Kupplung gemäß Patentanspruch 1, dem Verfahren gemäß Patentanspruch 14 und bei der Getränkeverarbeitungsanlage gemäß Patentanspruch 17 gelöst.

Nach nur mechanischer Verriegelung der Kupplungsteile der Kupplung, ohne den Druckfluid-Durchgang zu öffnen, enthält der nach außen isoliert gebildete Raum in der Kupplung diejenigen Oberflächenbereiche, die zuvor dem Umgebungseinfluss ausgesetzt waren und kontaminiert werden konnten. Die Einrichtungen der Kupplung ermöglichen es nun, den isolierten Raum gezielt und zuverlässig zu sterilisieren, indem von außen ein Sterilisationsmedium in den Raum eingebracht und der Raum unter Druck und/oder Temperatur gespült wird. Erst danach, d. h. nach korrekter Sterilisation, wird der Druckfluid-Durchgang geöffnet, sodass die dann korrekt sterilisierten Oberflächenbereiche ohne Gefahr des Eintragens einer Verunreinigung dem Druckfluid ausgesetzt werden können. Die Vorgänge der Sterilisation und des Öffnens des Druckfluid-Durchgangs können bequem ferngesteuert werden, um stets eine einwandfreie reproduzierbare Sterilisationsqualität sowie die Sicherheit gegen eine nachträgliche Produkt-Verunreinigung zu gewährleisten. Unter Sterilisation sind im Sinne der vorliegenden Erfindung alle aus dem Stand der Technik bekannten Verfahren sowie Sterilisationsmedien zu verstehen, mit denen eine teilweise, insbesondere vollständige, Schädigung und/oder Abtötung aller Mikroorganismen und/oder deren Ruhestadien (Sporen) ermöglicht wird. Unter dem Begriff Sterilisation ist hier auch eine Desinfektion und/oder eine Reinigung, also ein zumindest teilweises Beseitigen oder Wegspülen von Mikroorganismen, Sporen oder Keimen, zu verstehen.

Mit dem Verfahren, das bequem ferngesteuert durchführbar ist, aber auch manuell gesteuert werden kann, wird eine korrekte und einwandfreie Sterilisation eventuell kontaminierter Oberflächenbereiche erreicht, ehe der Druckfluid-Durchgang geöffnet wird und die schon sterilisierten Oberflächenbereiche in Kontakt mit dem Druckfluid kommen. Da das Personal nicht mit dem Desinfektionsmittel direkt in Kontakt kommen kann, unterbleibt auch die Gefahr von Hautreizungen oder dergleichen beispielsweise durch aggressive Sterilisationsmedien. Das Personal braucht eigentlich nur mehr die mechanische Verbindung der Kupplungsteile ordnungsgemäß vorzunehmen.

In der Getränkeverarbeitungsanlage ist schließlich sichergestellt, dass trotz ggf. nennenswerter Kontamination der Kupplungsteile das Produkt beaufschlagendes Druckfluid nur unter einwandfreien hygienischen, insbesondere aseptischen, Konditionen über die Kupplung in den Behälter eingebracht wird, und auch das Produkt im Behälter nicht durch beim Verbinden der Kupplungsteile verbliebene Verunreinigungen kontaminiert werden kann.

Zweckmäßig enthält der den Entnehmer-Druckfluid-Anschluss definierende Kupplungsteil ein selbsttätig sperrendes Ventil, und weist der den Geber-Druckfluid-Anschluss definierende Kupplungsteil einen wahlweise betätigbaren Ventilöffner auf, um zum zeitlich wählbaren Öffnen des Druckfluid-Durchgangs das Ventil zu entsperren. Der Ventilöffner ist, vorzugsweise, mechanisch und/oder pneumatisch und/oder hydraulisch und/oder elektrisch von außerhalb der Kupplung betätigbar, entweder durch einen Bediener oder durch eine übergeordnete Steuerung nach zuvor erfolgter Sterilisation des Raums.

Dabei kann es günstig sein, wenn der Ventilöffner ein in ein Gehäuse des den Geber-Druckfluid-Anschluss definierenden Kupplungsteils eingesetzter, pneumatischer oder hydraulischer Federspeicher-Zylinder ist. An dessen Kolben ist ein, vorzugsweise, in dem isolierten Raum, auf ein Ventilglied des Ventils ausgerichteter Stößel angeordnet, mit dem bei wahlweise gegen eine Rückstellfeder druckbeaufschlagtem Kolben das Ventil aufgesteuert wird. Das Ventil wird, verschieden von der üblichen Vorgehensweise im Stand der Technik, nicht bereits schon bei der mechanischen Verriegelung der Kupplungsteile geöffnet, sondern exakt getimt zu einem Zeitpunkt, der nach der Sterilisation gewählt wird.

Um sicherzustellen, dass der Ventilöffner nicht intern verschmutzt wird oder umgekehrt das Druckfluid beim Durchströmen des Raums nicht von der Seite des Ventilöffners kontaminiert wird, kann es zweckmäßig sein, dass der Stößel in dem Raum gegenüber dem Kolben des Ventilöffners zusätzlich durch eine Membrane abgedichtet wird.

Als Einrichtungen zum Sterilisieren des isolierten Raums können zweckmäßig in ein Gehäuse des den Geber-Druckfluid-Anschluss definierenden Kupplungsteils in Anschlusskanälen zum Raum ein Einlass- und ein Auslassventil für unter Druck durch den Raum gepresstes Sterilisationsmedium angeordnet sein. Dabei handelt es sich, vorzugsweise, um in ihre Absperrstellung federvorgespannte Pneumatik- oder Hydraulik-Sitzventile für Heißdampf oder ein anderes flüssiges oder gasförmiges Sterilisationsmedium. Diese Ventilarten, die in ihrer Bauweise auf das zu verarbeitende Medium und die aseptischen Anforderungen abgestimmt sein können, sind kostengünstig und sehr betriebssicher.

Das Einlass- und das Auslassventil kann jeweils ein Sitzschließglied aufweisen, welches im Anschlusskanal zum Raum zwischen dem Raum und einer Mündung eines Gehäusekanals im Anschlusskanal mit einem Ventilsitz im Gehäuse zusammenwirkt. In der Absperrstellung des Sitzschließgliedes am Ventilsitz wird somit zuverlässig leckagefreie Abdichtung gewährleistet.

Dabei kann, vorzugsweise, jede der beiden Mündungen wahlweise mit Zu- und Ablassleitungen für das Sterilisationsmedium verbunden werden, oder nach der Sterilisation wenigstens eine Mündung mit einer Druckfluid-Zuführleitung, vorzugsweise einer Gaszuführleitung verbunden werden. Nach dem Sterilisieren kann somit das Druckfluid bei geöffnetem Druckfluid-Durchgang über das eine oder das andere Ventil oder gleichzeitig über beide Ventile zugeführt werden, das bzw. die zuvor für die Sterilisation eingesetzt waren. Alternativ ist es möglich, für die Zufuhr des Druckfluids zum Raum ein weiteres Ventil und/oder einen, separaten Anschluss zum Raum vorzusehen, sodass die Einlass- und Auslassventile nur das Sterilisationsmedium steuern.

Der Vorzug ist jedoch einer Ausführung zu geben, bei der zumindest einer der an das Gehäuse angeschlossenen Sterilisations-Zuführ- und/oder Ablassleitungs-Anschlüsse nach erfolgter Sterilisation des Raums wahlweise als Druckfluid-Zuführleitungsanschlüsse einsetzbar ist bzw. sind. Diese Umschaltung kann zweckmäßig über entsprechend schaltbare Mehrwege/Mehrstellungsventile in den angeschlossenen Leitungen erfolgen.

Bei einer Ausführungsform mit eigenständiger erfinderischer Bedeutung ist in dem Raum wenigstens ein Zugang zum Anbringen eines von außen in das Gehäuse einsetzbaren Messaufnehmers vorgesehen, vorzugsweise eines Temperatur- und/oder Drucksensors. Der Messaufnehmer kann für eine übergeordnete Steuerung Zustandsbestimmungen vornehmen, die zusätzliche aussagefähige Informationen zu einer ordnungsmäßigen Funktion einerseits oder Betriebsstörungen andererseits liefern. Beispielsweise kann nach ausgeführter Sterilisation und Öffnen des Druckfluid-Durchgangs eine Überprüfung eines am Nehmer-Druckfluid-Anschluss herrschenden Drucks ausgeführt werden. Ferner kann die korrekte Verriegelung und Dichtheit der Kupplungsteile überprüft werden, um ggf. Gegenmaßnamen einzuleiten. Weiterhin kann, beispielsweise beim Sterilisieren mit Heißdampf, die Sterilisationstemperatur im Raum gemessen bzw. kontrolliert werden. Es ist auch möglich, nach der Sterilisation, beispielsweise mit Heißdampf, die Kupplung zunächst durch Spülen mit dem Druckfluid zu kühlen, ehe der Druckfluid-Durchgang geöffnet wird.

Grundsätzlich kann es zweckmäßig sein, wenn die Einrichtungen der Kupplung zu jeweils individuellen Betätigungen durch eine, vorzugsweise computerisierte, Steuerung steuerbar sind. Diese Betätigungen zumindest zwecks Sterilisation und/oder Öffnen des Druckfluid-Durchgangs, können, vorzugsweise, aber auch Zustandsmessungen im Raum der Kupplung durch wenigstens einen mit der Steuerung kommunizierenden Messaufnehmer umfassen. Über die Steuerung können z. B. die Schritte der Sterilisation und dergleichen programmiert ausgeführt werden, um jeweils exakt reproduzierbare Konditionen sicherzustellen.

In einer baulich einfachen Ausführungsform weist das Gehäuse des den Geber-Druckfluid-Anschluss definierenden Kupplungsteils einen einen Teil des Raums definierenden Rohrstutzen zum Aufschieben auf den Nehmer-Druckfluid-Anschluss auf, ferner zwei, vorzugsweise zur Achse des Rohrstutzen symmetrische, schräg abstehende Schultern, jeweils mit einer Aufnahme für das Einlass- und das Auslassventil, und den den Ventilsitz enthaltenden Anschlusskanal zum Rohrstutzen. Zwischen den Schultern kann eine weitere, zum Rohrstutzen durchgängige Aufnahme für den Ventilöffner angeordnet sein. Schließlich können, vorzugsweise an einer gemeinsamen Außenseite des Gehäuses, zwei Einsetzbohrungen für Leitungsanschlüsse vorgesehen und über Gehäusekanäle und die Mündungen mit den Anschlusskanälen zum Rohrstutzen verbunden sein. Das Gehäuse ist kompakt, leicht herstellbar und enthält alle Aufnahmen und Strömungswege für die erforderlichen Funktionen.

Bei einer weiteren Ausführungsform kann in einer Außenseite des Gehäuses, vorzugsweise, in der Außenseite mit den Einsetzbohrungen, wenigstens eine zum Rohrstutzen führende Bohrung für einen Messkopf des Messaufnehmers vorgesehen sein. Optional kann ferner, vorzugsweise an einer den Einsetzbohrungen abgewandten Außenseite des Gehäuses eine Halterung angebracht sein, mit der dieser Kupplungsteil positioniert werden kann.

Die Einlass- und Auslassventile und der Ventilöffner sind an pneumatische oder hydraulische Steuerleitungen angeschlossen, und weisen zweckmäßig sogar Hand-Not-Betätigungen auf. Die Steuerleitungen können zu Ventilen führen, die an eine Druckquelle angeschlossen sind und ggf. von der Steuerung entsprechend geschaltet werden.

Im Grunde genommen, weist die erfindungsgemäße Kupplung zwei Kupplungsteile auf, die miteinander dichtend verbindbar sind, um einen Fluidstrom durch die Kupplung zu ermöglichen. An wenigstens einem der beiden Kupplungsteile sind Hohlkörper (Behälter, Rohre oder Schläuche) angeschlossen, welche das Fluid nach dem Einsetzen der Fluidströmung aufnehmen. Vor dem Einsetzen der Fluidströmung wird um die Kupplungsteile dichtend eine Art Glocke platziert. Der Innenraum der Glocke und die Kupplungsteile werden nach dem Platzieren der Glocke sterilisiert. Nach dem Sterilisieren wird der Fluidstrom in Gang gebracht.

Bei einer zweckmäßigen Verfahrensvariante wird in dem isolierten Raum mittels eines Messaufnehmers bei und/oder nach dem Spülen mit Sterilisationsmedium und/oder nach dem Verbinden und/oder während des Verbindens des Raums mit dem Nehmer- und/oder dem Geber-Druckfluid-Anschluss die Temperatur und/oder der Druck gemessen, an eine Steuerung übertragen und in der Steuerung ausgewertet. Die vom Messaufnehmer beschafften Informationen können einerseits als Bestätigungen für korrekte Abläufe oder als Hinweise auf Störungen ausgewertet werden, beispielsweise um entsprechende Gegenmaßnahmen einzuleiten oder anzufordern.

Verfahrensgemäß werden ferner nach dem mechanischen Kuppeln der Kupplungsteile zunächst die Sterilisation des Raums, und erst dann nachfolgend das Öffnen und Beaufschlagen des Druckfluid-Durchgangs automatisch gesteuert.

Ausführungsformen des Erfindungsgegenstandes werden anhand der Zeichnungen erläutert. Es zeigen:
Fig. 1 eine Perspektivansicht, teilweise im Schnitt, einer Kupplung,
Fig. 2 eine perspektivische Rückansicht der Kupplung von Fig. 1,
Fig. 3 eine Perspektivansicht der Kupplung ähnlich wie in Fig. 1, in einer anderen Schnittdarstellung, und
Fig. 4 schematisch eine Getränkeverarbeitungsanlage, bei der die Kupplung beispielsweise der Fig. 1 bis 3 eingesetzt ist.

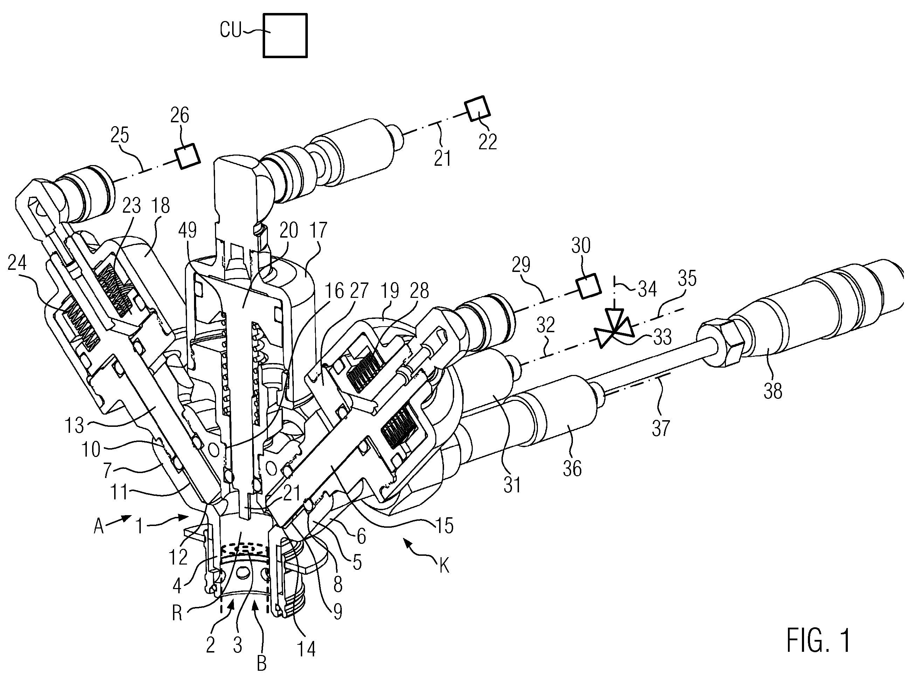

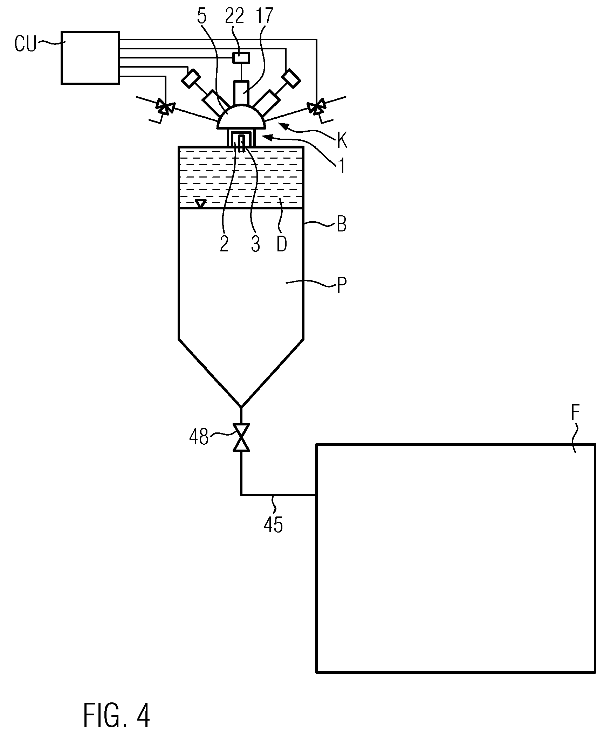

In Fig. 1 kuppelt eine Kupplung K, insbesondere eine Schnellkupplung, bestehend aus zwei Kupplungsteilen 1, 2 einen Druckfluid-Geber-Anschluss A mit einem Druckfluid-Nehmer-Anschluss B. Der Druckfluid-Geber-Anschluss A steht beispielsweise in Verbindung mit einer unter Druck stehenden Druckfluid-Leitung 34, der Druckfluid-Nehmer-Anschluss B gehört beispielsweise zu einem in Fig. 1 nicht gezeigten Behälter, in welchem ein Getränke-, Lebensmittel- oder pharmazeutisches Produkt oder eine Vorstufe des Produktes enthalten ist, das beispielsweise im Behälter unter Fluiddruck steht und aus diesem mittels Fluiddrucks (z. B. ein Schutzgas wie Stickstoff) dosiert aus dem Behälter herausgeführt wird (s. Fig. 4).

Die beiden Kupplungsteile 1, 2 sind über eine herkömmliche mechanische Verriegelung druckdicht miteinander verbunden. Der Kupplungsteil 2 enthält ein selbsttätig sperrendes Ventil 3, z. B. ein federvorgespanntes Rückschlagventil, das zum Herstellen eines Druckfluid-Durchgangs vom Kupplungsteil 1 durch den Kupplungsteil 2 geöffnet werden muss, bei getrennten Kupplungsteilen 1, 2 jedoch selbsttätig sperrt.

Der Kupplungsteil 1 weist ein Gehäuse 5 auf, das einen Rohrstutzen 4 umfasst, in welchem der Kupplungsteil 2 vom offenen Ende des Rohrstutzens 4 her eingeschoben wird, bis er darin abdichtet und die mechanische Verriegelung ordnungsgemäß gegriffen hat.

An dem Gehäuse 5 sind, vorzugsweise annähernd symmetrisch zur Achse des Rohrstutzens 4, zwei schräg abstehende Schultern 6, 7 angeformt. In jeder Schulter 6, 7 ist eine Aufnahme 8, 10 für ein eingesetztes Einlassventil 19 bzw. Auslassventil 18 (vorzugsweise Einschraubventilpatronen) vorgesehen. Von jeder Aufnahme 8, 10 führt ein Anschlusskanal 11, 9 zum Rohrstutzen 4, wobei in dem Anschlusskanal 9, 11 ein Ventilsitz 12, 14 geformt ist. In dem Anschlusskanal 11 bzw. 9 mündet zwischen der Aufnahme 10 und dem Ventilsitz 12, 14 ein nicht gezeigter Gehäusekanal, der mit einem an einer Außenseite montierten Leitungsanschluss 31 bzw. 36 verbunden ist. Zu den Leitungsanschlüssen 31, 36 führen Leitungen 32, 37, wobei in Fig. 1 in der Leitung 32 ein Mehrstellungs/Mehrwege-Ventil 33 (z. B. 3/2-Wegeventil, mechanisch oder magnetisch betätigt) angeordnet ist, das mit weiteren Leitungen 34, 35 verbunden ist.

Das Einlass- wie das Auslassventil 18, 19 ist in der gezeigten Ausführungsform mit einem aus einer Steuerleitung 25, 29 und einem Ventil 26, 30 mit Steuerdruck (pneumatisch oder hydraulisch) beaufschlagbaren Kolben 23, 27 ausgestattet, der mit einem Sitzschließglied 13, 15 verbunden und durch eine Feder 24, 28 in die gezeigte Absperrstellung gegen den Ventilsitz 12, 14 gepresst ist. In der Absperrstellung ist die nicht gezeigte Gehäusekanal-Mündung im Anschlusskanal 11, 9 leckagefrei dicht vom Rohrstutzen 4 getrennt.

Beispielsweise zwischen den Schultern 6, 7 ist ferner im Gehäuse 5 eine zum Rohrstutzen 4 durchgehende Aufnahme 16 für einen Ventilöffner 17 vorgesehen, der in der Aufnahme 16 verschraubt und abgedichtet sein kann. Der Ventilöffner 17 ist in der gezeigten Form als Federspeicher-Zylinder ausgebildet und enthält einen Kolben 20, der durch eine vorgespannte Feder 49 in der gezeigten oberen Endposition gehalten wird und aus einer Steuerleitung 21, (pneumatisch oder hydraulisch) und ein Ventil 22 mit Druck beaufschlagbar ist. Am Kolben 20 ist in dem Rohrstutzen 4 ein dünnerer Stößel 21 vorgesehen, zweckmäßig einstückig eingeformt, der zum Öffnen des Ventils 3 dient, sobald der Kolben 20 druckbeaufschlagt wird. Die Lagen der Ventile 18, 19 und des Ventilöffners 17 am Gehäuse 5 könnten anders gewählt werden, als gezeigt, vorausgesetzt der Stößel 21 kann das Ventil 3 erreichen. Die Ein- und Auslaufventile 18, 19 sowie ggf. der Ventilöffner 17 sind bevorzugt handbetätigbar.

Vor dem mechanischen Verbinden und Verriegeln der Kupplungsteile 1, 2 Umgebungseinflüssen ausgesetzte Oberflächenbereiche beider Kupplungsteile 1, 2, welche durch die Umgebungseinflüsse kontaminiert sein könnten, und die auch von dem durch die Kupplung geführten Druckfluid beaufschlagt werden, begrenzen in der Kupplung K gemäß Fig. 1 einen nach außen isolierten, geschlossenen Raum R.

Fig. 1 deutet ferner schematisch eine übergeordnete Steuerung CU, vorzugsweise eine computerisierte Steuerung CU, an, mit der zumindest die von den Einlass- und Auslassventilen 18, 19 und dem Ventilöffner 17 definierten Einrichtungen des Kupplungsteils 1 automatisch betätigbar sind. Nicht dargestellt sind in Fig. 1 Hand-Not-Betätigungen an den Einlass- und Auslassventilen 18, 19 und ggf. auch am Ventilöffner 17, um, z. B. in einem Notfall, manuell eingreifen zu können. Auch die Ventile 33, 41 könnten über die Steuerung CU geschaltet werden.

Als Option ist ferner in Fig. 1 ein Messaufnehmer 38 gezeigt, der mit einem in dieser Figur nicht sichtbaren Messkopf in den Raum R eingesetzt ist und am Gehäuse 5 festgelegt ist.

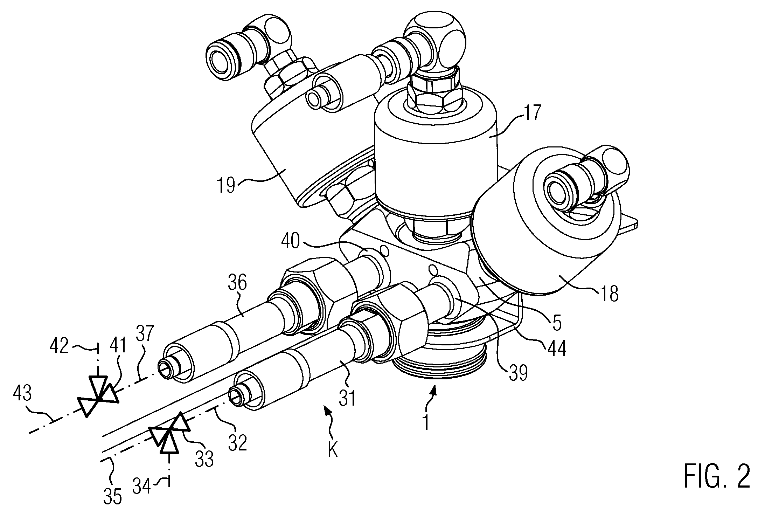

In der Rückansicht der Kupplung K von Fig. 2 sind die beiden Leitungsanschlüsse 31, 36 zu sehen, die an einer gemeinsamen Gehäuseaußenseite in Aufnahmebohrungen 39, 40 des Gehäuses 5 dicht eingesetzt sind. Der mit der Leitung 32 verbundene Leitungsanschluss 31 wurde bereits anhand Fig. 1 erläutert. Fig. 2 zeigt, dass der zweite Leitungsanschluss 36 mit einer Leitung 37 verbunden ist, in der ggf. ebenfalls ein Mehrwege/Mehrstellungsventil 41 enthalten sein kann, an welches wiederum Leitungen 42, 43 (für ein Sterilisationsmedium und als Druckfluid) angeschlossen sind.

Zwischen den Leitungsanschlüssen 31, 36 verläuft der Messaufnehmer 38 zur selben Außenseite des Gehäuses 5. Ferner ist am Gehäuse 5 an der gegenüberliegenden Außenseite eine Halterung 44 angebracht, z. B. angeschraubt, mit der der Kupplungsteil 1 positionierbar ist.

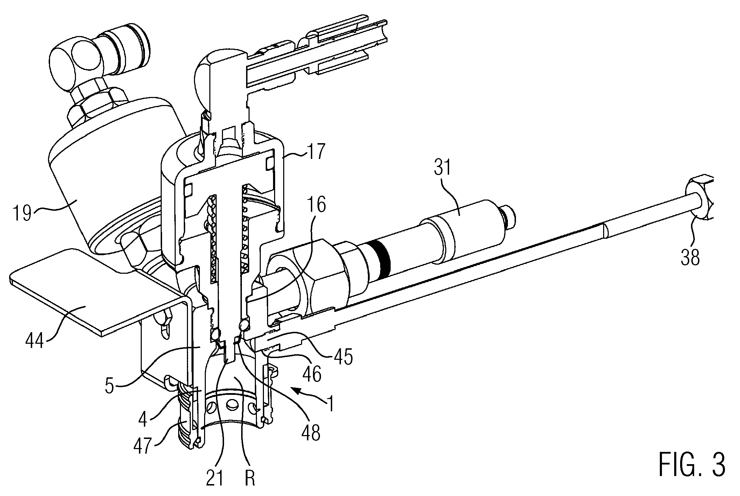

Fig. 3 verdeutlicht, wie von dem Messaufnehmer 38 ein Messkopf 45 in einer Öffnung 46 im Raum R bzw. des Gehäuses 5 platziert ist. Ferner ist eine Verriegelungshülse 47 des Kupplungsteils 1 gezeigt, mit der die Kupplungsteile 1, 2 über nicht näher erläuterte mechanische Sperreinrichtung mechanisch und dicht verriegelbar sind. In Fig. 3 ist bei 48 eine Membran angedeutet, die den Stößel 21 des Ventilöffners 17 zusätzlich gegenüber der Aufnahme 16 im Gehäuse 5 abdichtet.

Die in den Fig. 1 bis 3 gezeigte Kupplung K dient zum Herstellen einer aseptischen oder sterilen Verbindung zwischen den Anschlüssen A, B. Um die aseptische Kondition herzustellen, wird nach mechanischem Verbinden der Kupplungsteile 1, 2 und vor dem Öffnen des Ventils 3 der dann geschlossene und isolierte Raum R sterilisiert, beispielsweise durch Spülen mit Heißdampf oder einem anderen flüssigen oder gasförmigen Sterilisationsmedium unter Druck. Dafür sind die Einlass- und Auslassventile 18, 19 verantwortlich, solange sie an die Leitungen 35 z. B. zum Zuführen, und 43, z. B. zum Abführen des Sterilisationsmediums, angeschlossen sind. Hingegen sind die Einlass- und Auslassventile 18, 19 entweder gemeinsam oder nur eines von ihnen dafür verantwortlich, Druckfluid in den Raum R und bei geöffnetem Ventil 3 durch den Kupplungsteil 2 zu führen, sofern sie an die Leitung 34 oder 42 angeschlossen sind.

Der Messaufnehmer 38 ist ein Druck- und/oder Temperatursensor, und, zweckmäßig, mit der Steuerung CU verbunden, um Druck- und/oder Temperaturverhältnisse in dem Raum R abzugreifen und zu melden.

Zum Sterilisieren des Raums R wird das Einlassventil 18 in Fig. 1 aus der Steuerleitung 25 druckbeaufschlagt, sodass das Sitzschließglied 13 mit dem Kolben 23 gegen die Kraft der Feder 24 vom Ventilsitz 12 abgehoben wird. Dann strömt Sterilisationsmedium vom Leitungsanschluss 31, die Mündung im Anschlusskanal 11 und über den Ventilsitz 12 in den Raum R ein. Als Sterilisationsmedium wird beispielsweise Heißdampf verwendet. Gleichzeitig oder nacheilend wird das Auslassventil 19 aus der Steuerleitung 29 druckbeaufschlagt, sodass auch das Sitzschließglied 15 vom Ventilsitz 14 abhebt, und der Raum R über den Ventilsitz 14, die Mündung im Anschlusskanal 9 und den Leitungsanschluss 36 mit der Leitung 37 verbunden ist, über die das Sterilisationsmedium abgeführt wird. Der Messaufnehmer 38, falls vorhanden, kann die Sterilisationstemperatur und/oder den Sterilisationsdruck abgreifen und an die Steuervorrichtung CU melden. Der Ventilöffner 17 ist zu diesem Zeitpunkt noch nicht betätigt, sondern steht in der Fig. 1 gezeigten Stellung.

Nach korrekter Sterilisation des Raums R können die Mehrwege/Mehrstellungsventile 33 oder 41 umgeschaltet werden, z. B. um den sterilisierten Raum R mit Druckfluid beispielsweise aus der Leitung 34 oder 42 zu spülen und das Gehäuse 5 zu kühlen.

In der Folge (die Einlass- und Auslassventile 18, 19 können mittlerweile geschlossen oder nach wie vor offen sein, oder nur eines davon kann offen sein), wird der Ventilöffner 17 über die Steuerleitung 21 druckbeaufschlagt, sodass der Stößel 21 im Raum R das Ventil 3 öffnet, sodass der Fluid-Durchgang vom Raum R in den Kupplungsteil 2 offen ist. Dann kann über eines der Ventile 18, 19 oder über beide der Ventile 18, 19 Druckfluid zugeführt werden und vom Kupplungsteil 1 in den Kupplungsteil 2 strömen.

Bei geschlossenen Ein- und Auslassventilen 18, 19 und geöffnetem Ventil 3 kann über den Messaufnehmer 38 der Druck im Raum R abgegriffen werden, um eine Fehlfunktion, beispielsweise der mechanischen Verriegelung zwischen den Kupplungsteilen 1, 2 oder stromab des geöffneten Ventils, festzustellen und zu registrieren bzw. auszuwerten. Denn eine Verkeimung stromab des Ventils kann eine fehlerhafte Druckerhöhung erzeugen, hingegen ein Leck einen Druckverlust.

Um die Kupplungsteile 1, 2 voneinander zu trennen, wird das jeweilige Ventil 18, 19 oder werden beide Ventile 18, 19 durch Entlasten der Steuerleitungen 25, 29 in die in Fig. 1 gezeigte Absperrstellung gebracht, und wird auch der Ventilöffner 17 durch Entlasten der Steuerleitung 21 in die in Fig. 1 gezeigte Stellung gebracht. Das Ventil 3 schließt selbsttätig. Der Raum R wird entweder weitgehend drucklos oder bleibt unter geringem Restdruck. Dann wird durch Verschieben beispielsweise der Hülse 47 von Fig. 3 die mechanische Verriegelung zwischen den Kupplungsteilen 1, 2 gelöst und wird der Kupplungsteil 1 vom Kupplungsteil 2 abgezogen.

Bei der vorbeschriebenen Ausführungsform haben die Ventile 18, 19 eine Mehrfachfunktion, da sie zum Zu- bzw. Abführen des Sterilisationsmediums aber auch zum Zuführen des Druckfluids sowie zum Absperren des Raums R verwendet werden. Bei einer nicht gezeigten Alternative könnte zur Zufuhr des Druckfluids ein weiteres Ventil oder zumindest ein, separater Anschlusskanal zum Raum R vorgesehen sein. Ferner könnten die Ventile 18, 19 und/oder der Ventilöffner 17 mit Magneten elektrisch betätigt werden.

Ein wichtiger Aspekt der Erfindung ist die Ausbildung der Kupplungsteile 1, 2 derart, dass sie im zunächst mechanisch gekuppelten Zustand einen isolierten Raum begrenzen, in welchem diejenigen Oberflächenbereiche liegen, die bei getrennten Kupplungsteilen 1, 2 Umwelteinflüssen ausgesetzt sind und verschmutzen können, die aber auch später dem Druckfluid ausgesetzt werden. Dieser isolierte Raum wird dann mittels der Einlass- und Auslassventile 18, 19 mit einem Sterilisationsmedium gespült oder geflutet, das von außen unter Druck eingeführt und wieder abgeführt wird und die aseptische Kondition im Raum R herstellt. Dabei bleibt das Ventil 3 geschlossen, weil der Ventilöffner 17 zunächst aus der Steuerleitung 21 noch nicht druckbeaufschlagt ist. Erst nach korrekter Sterilisation des Raums R, und ggf. Spülen des Raums R z. B. mit dem Druckfluid, werden das Ventil 3 des Ventilöffners 17 und der Druckfluid-Durchgang geöffnet. Der wenigstens eine optional eingesetzte Messaufnehmer 38 kann für die einzelnen Vorgänge beim Ablauf des Verfahrens zusätzliche Informationen beschaffen und an eine übergeordnete Steuerung CU weitergeben, die dort berücksichtig, ausgewertet oder verarbeitet werden.

Fig. 4 verdeutlicht beispielhaft den Einsatz der Kupplung K der Fig. 1 bis 3 in einer Verarbeitungsanlage F z. B für die Getränke- oder Lebensmittelindustrie. Im Behälter B ist oberhalb des Produkts P ein Druckfluid D unter Druck vorhanden, beispielsweise Stickstoff oder ein anderes Schutzgas, das über die Kupplung K eingespeist wird. Es könnten mehrere Behälter mit erfindungsgemäßen Kupplungen parallel eingesetzt werden, um beispielsweise einen für die Produktion unterbrechungsfreien Wechsel leerer Behälter zu ermöglichen. In der Kupplung K sind die Kupplungsteile 1, 2 mechanisch verriegelt und ist das Ventil 3 durch den Ventilöffner 17 geöffnet, sodass durch geregelte Zufuhr des Druckfluids über die Kupplung K im Behälter B ein konstanter Druck gehalten wird, mit dem das Produkt P (oder eine entsprechende Vorstufe des Produkts wie z.B. ein Produktkonzentrat) über die Verbindungsleitung 47 in die Verarbeitungsanlage F zugeführt wird. Der Behälter B besitzt vorteilhafterweise einen trichterförmigen Boden. An einem Schließventil 48 ist eine Verbindungsleitung 47 befestigt. Diese kann vor dem Öffnen des Schließventils 48 mit aus dem Stand der Technik bekannten Verfahren oder Mitteln zur Sterilisation sterilisiert werden.

In der Verarbeitungsanlage F können beispielsweise Einrichtungen zum Mischen des Produkts P oder seiner Vorstufe mit z.B. sterilem Wasser, Behälter zum Zwischenspeichern von gemischtem Produkt oder auch eine Getränkeabfüllmaschine enthalten sein. Die Steuerung CU kann nicht nur die Vorgänge zum Sterilisieren des Raums R in der Kupplung K, die Verbindung der Ventile mit den richtigen Zuführ- und Abführleitungen, sondern auch die Betätigung beispielsweise des Ventils 22 und der Mehrwegeventile steuern, und ggf. auch die Regelung eines konstanten, im Behälter B einzustellenden Drucks vornehmen.

Insbesondere ist der Behälter B über Rohre und ggf. weitere Einrichtungen wie Mixern an eine Abfüllmaschine angeschlossen, welche ein hergestelltes Getränk in Behältnisse wie Dosen, Flaschen, KEGs oder dergleichen, insbesondere kontinuierlich, abfüllt. An der Abfüllmaschine sind insbesondere eine Vielzahl von Abfüllventilen vorgesehen, um das Produkt gesteuert in die Behältnisse einzufüllen.

## Patentansprüche

1. Kupplung (K) mit zwei mechanisch kuppelbaren Kupplungsteilen (1, 2) zum dichten Verbinden eines Druckfluid-Geber-Anschlusses (A) und eines Druckfluid-Nehmer-Anschlusses (B) über einen zu öffnenden Druckfluid-Durchgang (3) und unter aseptischer Kondition, insbesondere eines Druckfluid-Leitungs-Anschlusses und eines Anschlusses eines Behälters für Lebensmittel-, Getränke- oder pharmazeutische Produkte (P) oder jeweilige Vorprodukte davon, wobei die aseptische Kondition durch Sterilisieren von vor dem mechanischen Kuppeln der Kupplungsteile (1, 2) Umgebungseinfluss, und nach Öffnen des Druckfluid-Durchgangs (3), dem Druckfluid ausgesetzten Oberflächenbereichen der Kupplungsteile (1, 2) herstellbar ist, **dadurch gekennzeichnet, dass** in der Kupplung (K) ein von den Oberflächenbereichen begrenzter, bei mechanisch gekuppelten Kupplungsteilen (1, 2) gegenüber den Druckfluid-Geber- und - Nehmeranschlüssen (A, B) isolierter Raum (R) gebildet wird, und dass die Kupplung (K) Einrichtungen zum Sterilisieren des isolierten Raums (R) mit von außen in den Raum (R), insbesondere unter Druck, eingebrachtem Sterilisationsmedium und zum erst nachfolgendem Öffnen des Druckfluid-Durchgangs (3) aufweist.

2. Kupplung nach Anspruch 1, **dadurch gekennzeichnet, dass** der den Nehmer-Druckfluid-Anschluss (B) definierende Kupplungsteil (2) ein selbsttätig sperrendes Ventil (3) enthält, und dass der den Geber-Druckfluid-Anschluss (A) definierende Kupplungsteil (1) einen wahlweise betätigbaren Ventilöffner (17) aufweist, vorzugsweise einen mechanisch und/oder pneumatisch und/oder hydraulisch und/oder elektrisch betätigbaren Ventilöffner (17).

3. Kupplung nach Anspruch 2, **dadurch gekennzeichnet, dass** der Ventilöffner (17) ein in ein Gehäuse (5) des den Geber-Druckfluid-Anschluss (A) definierende Kupplungsteils (1) eingesetzter, pneumatischer oder hydraulischer Federspeicher-Zylinder ist, an dessen Kolben (20) ein, vorzugsweise in dem Raum (R), auf ein Ventilglied des Ventils (3) ausgerichteter Stößel (21) angeordnet ist, mit dem das Ventil (3) bei wahlweise gegen eine Rückstellfeder (49) druckbeaufschlagtem Kolben (20) aufsteuerbar ist.

4. Kupplung nach Anspruch 3, **dadurch gekennzeichnet, dass** im Raum (R) der Stößel (21) gegenüber dem Kolben (20) des Ventilöffners (17) durch einen Membrane (48), vorzugsweise zusätzlich zu einer Gleitabdichtung des Kolbens (20), abgedichtet ist.

5. Kupplung nach Anspruch1, **dadurch gekennzeichnet, dass** in ein Gehäuse (5) des den Geber-Druckfluid-Anschluss (A) definierenden Kupplungsteils (1) in Anschlusskanälen (9, 11) zum Raum (R) ein Einlass- und ein Auslassventil (18, 19) für das Sterilisationsmedium angeordnet sind, vorzugsweise in ihre jeweilige Absperrstellung federvorgespannte Pneumatik oder Hydraulik-Sitzventile für Heißdampf oder ein anderes flüssiges oder gasförmiges Sterilisationsmedium.

6. Kupplung nach Anspruch 5, **dadurch gekennzeichnet, dass** das Einlass- und das Auslassventil (18, 19) ein Sitzschließglied (13, 15) aufweist, welches im Anschlusskanal (9, 11) zum Raum (R) zwischen dem Raum (R) und einer Gehäusekanal-Mündung in den Anschlusskanal (9, 11) mit einem Ventilsitz (12, 14) im Gehäuse (5) zusammenwirkt, wobei, vorzugsweise, entweder die beiden Mündungen wahlweise mit Sterilisationsmedium-Zu- und -Ablassleitungen (32, 37, 35, 43) oder wenigstens eine Mündung mit einer Druckfluid-Zuführleitung (34, 42), vorzugsweise, einer Gas-Zuführleitung, verbindbar ist bzw. sind.

7. Kupplung nach Anspruch 6, **dadurch gekennzeichnet, dass** die an das Gehäuse (5) angeschlossene Sterilisationsmedium-Zuführ- und/oder -Ablassleitung (32, 37) nach erfolgter Sterilisation des Raums (R) wahlweise als Druckfluid-Zuführleitung einsetzbar ist bzw. sind, vorzugsweise über wenigstens ein Mehrwege-Mehrstellungs-Ventil (33, 41).

8. Kupplung nach Anspruch 1, **dadurch gekennzeichnet, dass** im Raum (R) wenigstens ein Zugang (46) zum Anbringen eines von außen in das Gehäuse (5) einsetzbaren Messaufnehmers (38) vorgesehen ist, vorzugsweise eines Temperatur- und/oder Drucksensors.

9. Kupplung nach Anspruch 1, **dadurch gekennzeichnet, dass** die Einrichtungen der Kupplung (K) zur jeweils individuellen Betätigung zumindest zwecks Sterilisation und Öffnen des Druckfluid-Durchgangs (3), vorzugsweise auch zwecks Zustandsmessung im Raum (R), durch eine, vorzugsweise computerisierte, Steuerung (CU) steuerbar sind.

10. Kupplung nach Anspruch 2 oder 3, **dadurch gekennzeichnet, dass** das Gehäuse (5) einen Teil des Raums (R) definierenden Rohrstutzen (4) zum Aufschieben auf den Nehmer-Druckfluid-Anschluss (A) aufweist, an welchem zwei, vorzugsweise zur Achse des Rohrstutzens (4) symmetrische, schräg abstehende Schultern (6, 7) jeweils mit einer Aufnahme (8, 10), vorzugsweise für das Einlass- oder Auslassventil (18, 19), und der einen Ventilsitz (12, 14) enthaltende Anschlusskanal (9, 11) zum Rohrstutzen (4) angeordnet sind, dass zwischen den Schultern (6, 7) eine weiter zum Rohrstutzen (4) durchgängige Aufnahme (16), vorzugsweise für den Ventilöffner (17), angeordnet ist, und dass in einer, vorzugsweise gemeinsamen, Außenseite des Gehäuses (5) Einsetzbohrungen (39, 40) für Leitungs-Anschlüsse (31, 36) vorgesehen und über die Gehäusekanal-Mündungen mit den Anschlusskanälen (9, 11), verbunden sind.

11. Kupplung nach Anspruch 8, **dadurch gekennzeichnet, dass** in einer Außenseite des Gehäuses (5), vorzugsweise in der die Einsetzbohrungen (39, 40) enthaltenden Außenseite, wenigstens eine zum Rohrstutzen (4) führende Bohrung (46), für einen Messkopf (45) des Messaufnehmers (38) vorgesehen ist, und dass, vorzugsweise, an einer den Einsetzbohrungen abgewandten Außenseite des Gehäuses (5) eine Halterung (44) angebracht ist.

12. Kupplung nach wenigstens einem der vorhergehenden Ansprüche, **dadurch gekennzeichnet, dass** die Einlass- und Auslass-Ventile (18, 19) und der Ventilöffner (17) über Steuerleitungen (21, 25, 29) mit Ventilen (22, 26, 30), vorzugsweise Magnetventilen, verbunden sind, die mit der Steuerung (CU) verknüpft sind, und dass, vorzugsweise die Einlass- und Auslassventile (18, 19) und/oder der Ventilöffner (17) Hand-Not-Betätigungen aufweisen.

13. Verfahren zum mechanischen und dichten Kuppeln eines Druckfluid-Nehmer-Anschlusses (B) mit einem Druckfluid-Geber-Anschluss (A) unter aseptischer Kondition mittels einer zwei Kupplungsteile (1, 2) aufweisenden Kupplung (K), insbesondere Schnellkupplung, insbesondere eines Druckfluid-Leitungs-Anschlusses und eines Anschlusses eines Behälters (B) für Lebensmittel-, Getränke- oder pharmazeutische Produkte (P), **gekennzeichnet durch** folgende Schritte:
**Durch** rein mechanisches Kuppeln der Kupplungsteile (1, 2) wird in der Kupplung (K) ein geschlossener Raum (R) gebildet und vom Nehmer-Druckfluid-Anschluss (B) und vom Geber-Druckfluid-Anschluss (A) isoliert,
der isolierte Raum (R) wird zum Herstellen der aseptischen Kondition mit einem Sterilisationsmedium gespült, und
erst nach Herstellen der aseptischen Kondition wird der Raum (R) **durch** Öffnen eines Druckfluid-Durchgangs (3) mit dem Geber-Druckfluid-Anschluss (A) und/oder dem Nehmer-Druckfluid-Anschluss (B) verbunden.

14. Verfahren nach Anspruch 12, **dadurch gekennzeichnet, dass** in dem Raum (R) mittels eines Messaufnehmers (38) bei und/oder nach dem Spülen, bei und/oder nach dem Verbinden des Raums (R) mit dem Nehmer-Druckfluid-Anschluss (B) und/oder dem Geber-Druckfluid-Anschluss (A) die Temperatur und/oder der Druck gemessen und von einer Steuerung (CU) registriert und ausgewertet wird bzw. werden.

15. Verfahren nach Anspruch 12, **dadurch gekennzeichnet, dass** nach dem mechanischen Kuppeln der Kupplungsteile (1, 2) das Spülen des Raums (R) und das Öffnen und Beaufschlagen des Druckfluid-Durchgangs (3) zeitlich aufeinanderfolgend, vorzugsweise automatisch, gesteuert werden.

16. Getränkeverarbeitungsanlage (F) für Getränke- oder Lebensmittel-Produkte (P), mit einem das Produkt (P) enthaltenden Behälter (B), der zum Zuführen des Produkts (P) in die Getränkeverarbeitungsanlage (F) durch einen Behälter-Nehmer-Druckfluid-Anschluss (B) über eine an einem Geber-Druckfluid-Anschluss (A) angeschlossene, in eine aseptische Kondition gebrachte Kupplung (K) gemäß Anspruch 1 mit Druckfluid (D) beaufschlagbar ist.
